Europäisches Patentamt

(19) European Patent Office

Office européen des brevets

(11) Publication number: **0 036 324**
**A2**

(12) # EUROPEAN PATENT APPLICATION

(21) Application number: 81301098.0

(22) Date of filing: 17.03.81

(51) Int. Cl.³: **B 60 K 28/00**
**B 60 Q 9/00**

(30) Priority: 18.03.80 GB 8009046

(43) Date of publication of application:
23.09.81 Bulletin 81/38

(84) Designated Contracting States:
DE FR GB IT

(71) Applicant: LUCAS INDUSTRIES LIMITED
Great King Street
Birmingham, B19 2XF(GB)

(72) Inventor: Holt, William David
Garth Holme Keighley Road
Laneshawbridge Colne Lancashire BB8 7HL(GB)

(72) Inventor: Nevett, Leslie James
Ribblesdale View Brindleton
Clitheroe Lancashire BB7 4QT(GB)

(74) Representative: Evershed, Michael et al,
MARKS & CLERK Alpha Tower A.T.V. Centre
Birmingham B1 ITT(GB)

(54) Tractor vehicle safety system.

(57) A tractor vehicle safety system comprises a logic circuit 8 and a socket 112 mounted on the tractor. The socket 112 includes a set of magnetically operable switches 112a, 112b, 112c and 112d. The socket 112 also includes a winding 114 connected across an oscillator 9. A plug 117 for mounting on a trailer includes an electromagnet 119 connected in series with a winding 120, which together with the winding 114 forms a transformer 115, a normally closed emergency switch 125 connected between the winding 120 and electromagnet 119, and a set of magnets 117a, 117b and 117c for actuating the switches 112a, 112b and 112c. Although all three magnets are shown, in practice only desired magnets would be included which relate to the safety requirements of a machine provided on the trailer and the emergency switch 125 is optional. The logic circuit 8 drives a warning circuit and also a vehicle disabling circuit. In use, with the socket 112 engaged with a plug 117 appropriate for the safety requirements of the trailer machine being used, the switches 112a and 112d are closed as is appropriate for the safety requirements and the warning circuit and vehicle disabling circuit are actuated if the safety requirements of the trailer machine are not met.

FIG. I.

This invention relates to a tractor vehicle safety system.

Agricultural tractors generally include a power take-off shaft which can be coupled to a machine on a trailer vehicle. Various types of machine can be used in combination with a tractor and the safety requirements for different machines differ. Thus, when one machine is in use it may be unsafe to permit the take-off shaft to be driven at a fast speed, or to be driven at all except when the driver is actually in his seat, whereas with other machines there may be no safety considerations involved. It is also important that a safety system is resistant to tampering.

It is difficult to design a safety system meeting the various requirements and it is an object of this invention to provide a simple and convenient tamper proof arrangement for varying the functions of a safety system in accordance with the trailer machine in use.

According to this invention, there is provided a safety system for a tractor vehicle and a trailer vehicle equipped with a machine, said system comprising a connector having a plurality of magnetically operable switches mounted on the tractor vehicle, a mating connector mounted on the trailer vehicle having magnets for closing appropriate ones of the magnetically operable switches, a logic circuit connected to the magnetically operable switches, and safety means driven by the logic circuit, the arrangement being such that the closed magnetically operable switches provide links between circuit elements of the logic circuit appropriate to the safety requirements of the trailer machine in use and the safety means is operated when the safety requirements of the trailer machine are not met.

This invention will now be described in more detail by way of example with reference to the accompanying drawings in which:- .

Figures 1 and 2 are a circuit diagram of an example of a tractor safety system in accordance with the invention,

Figure 3 is an elevation of a socket used in Figure 1,

Figure 4 is an elevation of a plug used in Figure 1,

Figure 5 is a side view of the plug and socket interengaged, and

Figure 6 is an electrical circuit diagram of a modification of the invention.

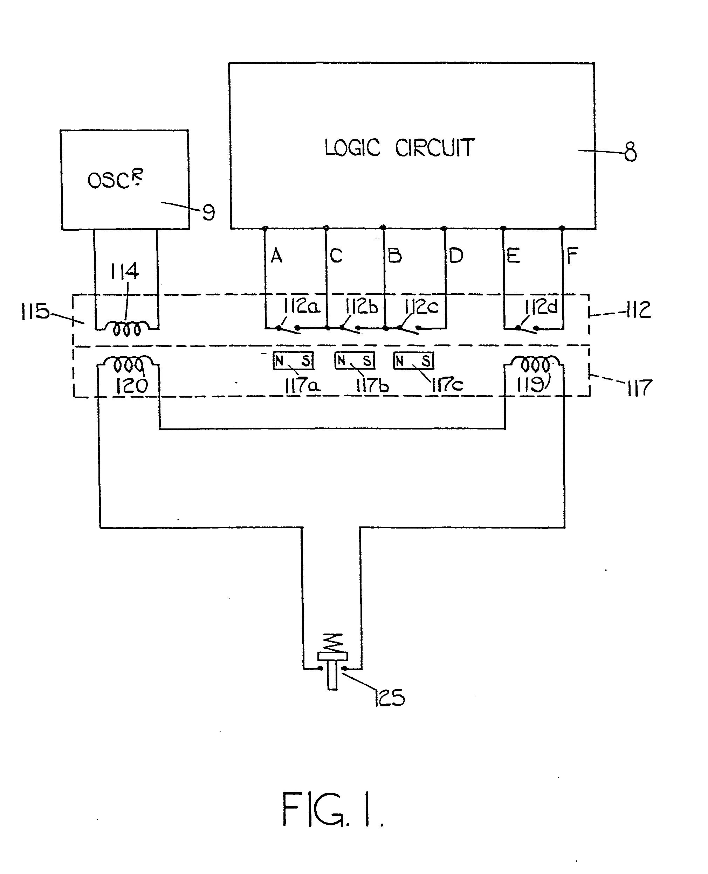

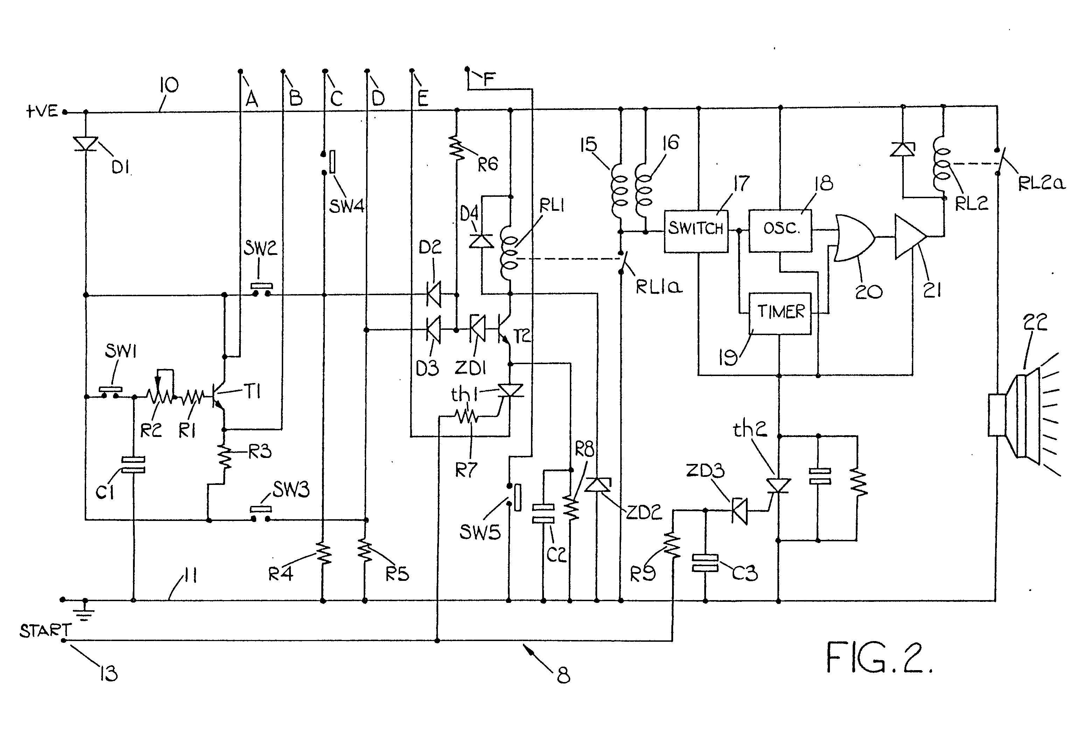

Turning firstly to Figures 1 and 2, the safety system comprises a logic circuit 8 having terminals A, B, C, D, E and F which are connected to a socket 112, the logic circuit and the socket 112 being mounted on the tractor vehicle. The socket 112 is arranged to mate with a plug 117 mounted on a trailer vehicle.

Referring now particularly to Figure 2, the logic circuit 8 shown includes a positive supply rail 10 and an earth rail 11. A diode $D_1$ has its anode connected to the rail 10 and its cathode connected to one terminal of a driver's seat switch SW1 which is normally open but closes when the tractor driver is seated in the driver's seat. The other terminal of switch SW1 is connected by a capacitor $C_1$ to rail 11 and by a resistor $R_1$ and a variable resistor $R_2$ in series to the base of an npn transistor $T_1$. The emitter of transistor $T_1$ is connected by a resistor $R_3$ to the cathode of diode $D_1$ and its collector is connected directly to the cathode of diode $D_1$.

One terminal of each of two normally closed switches SW2, SW3 is connected to the cathode of the diode $D_1$. The other terminal of switch SW2 which opens when power take-off fast is selected, is connected by a resistor $R_4$ to the

rail 11. The other terminal of switch SW3 which opens
when power take-off slow is selected is connected by a
resistor $R_5$ to earth rail 11. The collector of transistor
$T_1$ is connected to terminal A and the emitter of transistor
$T_1$ is connected to terminal B. Said other terminal of
switch SW2 is connected by a switch SW4, which is closed
whenever the tractor throttle pedal (or lever) is depressed
less than a predetermined distance, to terminal C. The
other terminal of switch SW3 is connected to terminal D.

Two diodes $D_2$, $D_3$ have their cathodes connected to
respective ones of the other terminals of switches SW2 and
SW3 and their anodes are connected together. The anodes of
diodes $D_2$ and $D_3$ are connected by a resistor $R_6$ to the rail
10 and are also connected to the cathode of the zener diode
$ZD_1$, the anode of which is connected to the base of an npn
transistor $T_2$. The collector of transistor $T_2$ is connected
by a relay winding RL1 to the rail 10 with the usual free-
wheel diode $D_4$ bridging the relay winding. The collector
of the transistor $T_2$ is also connected by a zener diode $ZD_2$
to the earth rail 11. The emitter of transistor $T_2$ is
connected to the anode of a thyristor Th1 the cathode of
which is connected to terminal E, terminal F being
connected to the rail 11 via a switch (or a group of switches
in series) SW5 which open when the tractor tilts more than
$30^\circ$ in any direction. The gate of thyristor Th1 is connected
by a starter switching circuit (not shown) to the rail 10
when starting is in progress. A resistor $R_8$ and a capacitor
$C_2$ are connected in parallel with one another between the
emitter of the transistor $T_2$ and the earth rail 10.

The relay RL1 has a normally open contact RL1a which
is connected in series with a first solenoid valve winding
15 between the rails 10 and 11. A second solenoid valve
winding 16 is connected in parallel with the winding 15.
The solenoid valve winding 15 controls a fuel valve in the fuel system of the tractor so as to prevent flow of fuel to the tractor engine except when the winding 15 is energised. The winding 16 controls a valve in the hydraulic system of the vehicle which is arranged so that, except when winding 16 is energised:-

    (a)    a clutch connecting the power take-off to the engine is disengaged;

    (b)    a brake on the power take-off is engaged;

    (c)    the road wheel brakes of the tractor vehicle are engaged.

The relay contact RL1a also controls an audible warning device. To this end contact RL1a is connected to an electronic switch circuit 17 the output of which is low when the contact RL1a is closed. The switch circuit 17 controls an oscillator 18 and a timer circuit 19. The oscillator 18 provides an output signal which is intermittently high when the switch circuit 17 output is high. The timer circuit 19 output goes high 30 seconds after the switch circuit 17 output goes high. The outputs of the oscillator circuit 18 and the timer circuit 19 are connected to the inputs of an OR gate 20 the output of which drives an amplifier 21 controlling a relay RL2, a contact RL2a of which is connected in series with one or more horns 22.

The circuits 17, 18, 19, 20 and 21 are all connected to the earth rail 11 via a thyristor Th2, the gate of which is connected to the anode of a zener diode ZD3. The cathode of zener diode ZD3 is connected by a resistor $R_9$ to the start contact 13 a capacitor $C_3$ connected between the cathode of the zener diode ZD3 and the rail 11 forming, in combination with the resistor $R_9$, a delay circuit which delays firing of thyristor Th2 when starting.

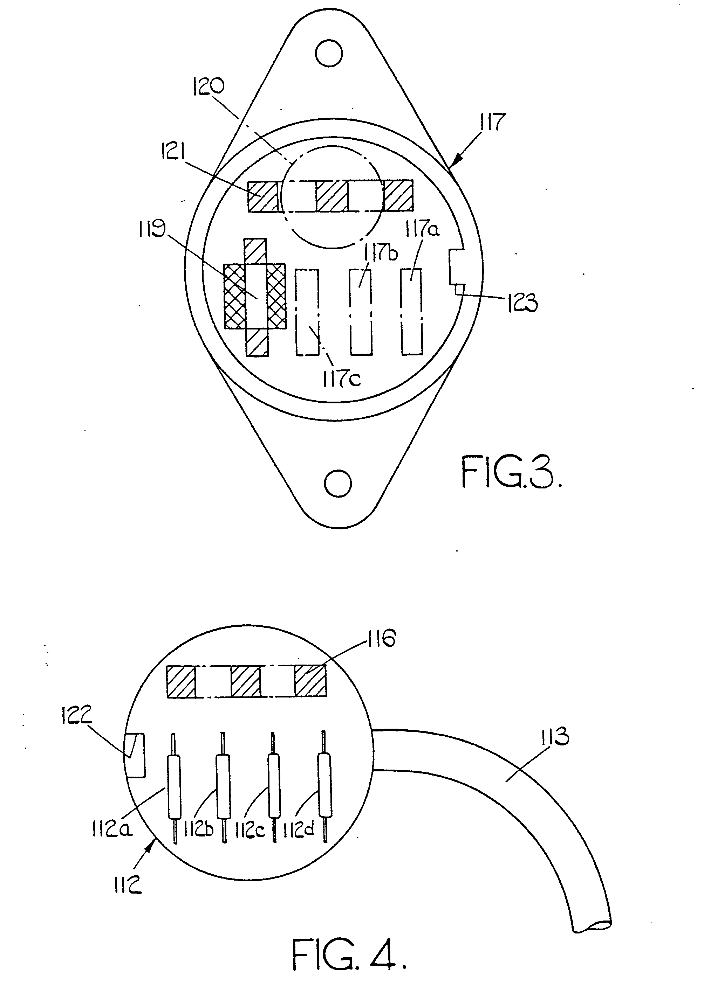

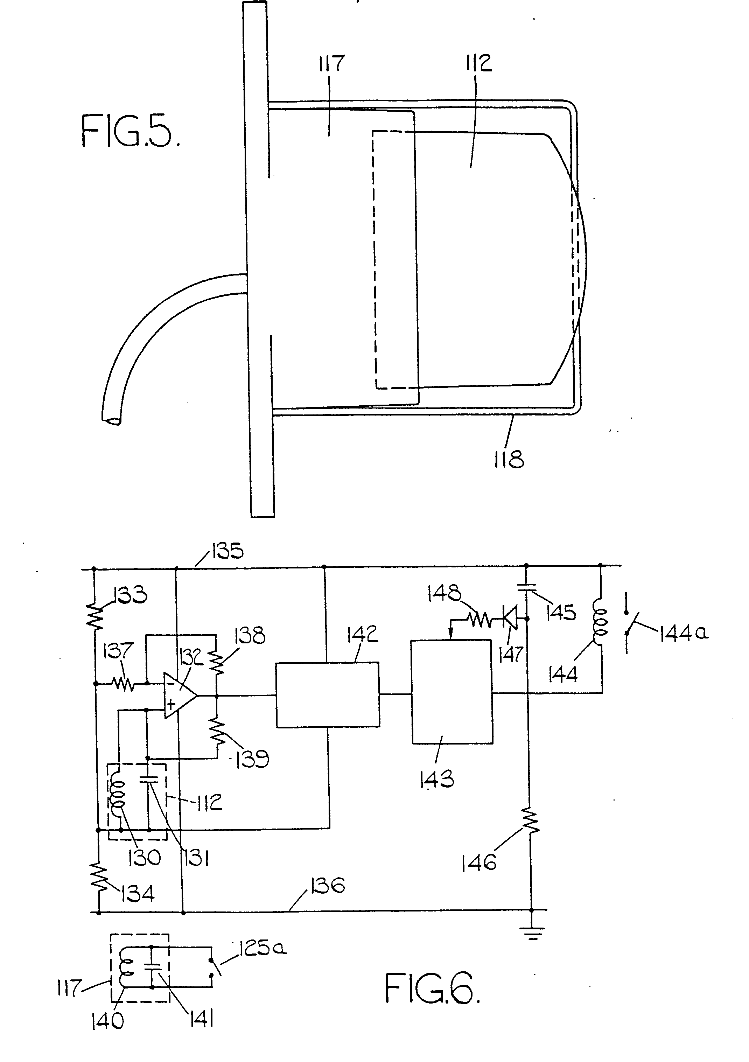

Referring now to Figures 1, 3, 4 and 5, A,B,C,D, E and F are connected to four magnetic sealed reed switches 112a, 112b, 112c and 112d mounted on the plug 112 on a lead 113. The plug 112 also houses the primary winding 114 of a transformer 115 on the centre leg of an E-shaped core 116. The primary winding 114 is connected to the output of an oscillator 9. The switches 112a, 112b, 112c and 112d connect the terminals A and C, B and C, B and D and E and F respectively.

A co-acting socket 117 shaped to receive and retain the plug 112 (a wire retaining spring 118 being provided for this purpose) is provided on each trailer mounted machine. This socket has one or more an array of permanent magnets 117a, 117b and 117c to co-act with the switches 112a 112b and 112c respectively and an electromagnet 119 to co-act with the switch 112d. The socket also includes a transformer secondary winding 120 on an E-core 121, which when the socket and plug are interengaged, co-acts with the E-core 116 to make up an 8-core linking the windings 114, 120. The plug and socket have a groove 122 and a key 123 respectively to ensure that the plug can only be inserted in the correct position.

The configuration of magnets shown in the drawings is now one which is actually used in practice. There are four socket arrangements and these are as follows,

(a) "Dummy" socket (mounted on tractor) - the electromagnet 119 is connected directly to the secondary 120 for actuating switch 112d.

(b) "Rotovator" socket - there is a magnet for actuating switch 112c and the electromagnet 119 is permanently connected to the winding 120.

(c) "Potato Picker" socket - there is one permanent magnet for actuating switch 112c only, and one
electromagnet for actuating the switch 112d,
the electromagnet being connected in series
with the transformer secondary winding 120, and
a normally closed emergency switch 125.

(d)   "Generator" socket - there are three permanent
magnets for actuating all three switches 112a,
112b and 112c and the electromagnet 119 and
winding 120 are permanently connected.

If an attempt is made to start the tractor engine
without any mating socket 117 engaged with the plug 112,
the relay RL1 cannot be energised because there is no link
between the terminals E and F. If the attempt to start
the engine is sustained long enough for thyristor Th2 to
fire the horn will sound intermittently for the thirty
second duration of timer 19 and then continuously until
the +ve supply to rail 10 is interrupted briefly.

If the "dummy" socket 117 is engaged with the plug
112, the electromagnet 119 is energised thereby closing
switch 112d and thus providing a link between terminals
E and F so that the vehicle can be started provided that
neither of the switches SW2 or SW3 is open as a result of
power take-off fast or slow having been selected. If,
while the engine is running either fast or slow is selected,
the associated switch will open thereby disconnecting the
cathode of the associated diode $D_2$ or $D_3$ from the +ve rail
10 and causing the base current of transistor $T_2$ to be
bled off via one of the resistors $R_4$ or $R_5$. Transistor
$T_2$ thus switches off causing de-energisation of relay RL1
and therefore of the windings 15 and 16. The vehicle is
thus immobilised and the horn intermittent/continuous
sequence is started.

With the "rotovator" socket 117 engaged with the plug
112, the magnet for actuating switch 112c causes a link to
be provided between terminals B and D and as before a link
is provided between terminals E and F. In this condition
the normal "safe" condition exists only when power take-off
slow is selected and the driver is in his seat. Thus if
switch SW2 opens diode $D_2$ conducts and turns off relay RL1.
Similarly if switch SW1 opens transistor $T_1$ (which is
normally on) turns off and diode $D_3$ conducts via the link
B-D (switch SW3 being open when power take-off slow is
selected) and turns off the transistor $T_1$.

With the "potato picker" socket engaged with the plug
117, the normally closed emergency switch 125 is connected
between secondary winding 120 and electromagnet 119. In
this case the vehicle is safe when the driver is in his
seat and power take-off slow is selected or otherwise when
power take-off fast is not selected as in the case of the
rotovator. In addition however, an operator working on
the potato picker can trigger off the safety system by
opening the emergency switch 125.

It should be noted that in either of the two preceding
cases above, if the driver leaves his seat while the engine
is running and power take-off slow is selected, nothing
will happen for two seconds because of capacitor $C_1$ which
is held charged up when switch SW1 is closed, and discharges
through the base-emitter of transistor $T_1$ when switch SW1
opens.

Finally, with the "generator" socket engaged with the
plug 112, the permanent magnets cause switches 112a, 112b
and 112c to close thereby providing links between terminals
A, B, C and D in addition to the link between terminals
E and F.

In this condition the link B - D acts as before, but link A - B overrides the seat interlock. Link B - C, which is in series with the throttle switch SW4 overrides switch SW2 so long as the throttle pedal is not depressed past its predetermined distance. This ensures that the generator is not driven too fast.

In all modes the relay RL1 is de-energised if switch (or switches) SW5 opens indicating that the tractor is in danger of overturning. If the tractor does overturn the horn sounds intermittently, then continuously, thereby summoning help if the driver is unable to switch off the power switch.

In the modification shown in Figure 6 an alternative arrangement for the emergency switch 125 of Figure 1 is employed. The oscillator 9, transformer 115, electromagnet 112d are all omitted. Instead the plug 112 contains an inductor 130 and a capacitor 131 connected in parallel and also connected by conductors in the cable on which the plug is carried to additional circuit components in the circuit 10. Such additional components include an operational amplifier 132 having its non-inverting terminal connected by the inductor 130 and capacitor 131 in parallel to the junction of two resistors 133, 134 connected in series between a supply rail 135 and an earth rail 136. The inverting input of the amplifier 132 is connected by a resistor 137 to the junction of resistors 133, 134 and there are two feedback resistors 138, 139 connecting the output of amplifier 132 to its inverting and non-inverting inputs respectively. The values of resistors 137, 138 and 139 are chosen so that the oscillator 132 normally operates as an oscillator, the positive feedback via resistor 139 exceeding to negative feedback via resistor 138 at the resonant frequency of the tuned circuit constituted by the inductor 130 and the capacitor 131.

Each of the sockets 117 with which the plug 112 is used incorporates an inductor 140 and a capacitor 141 (of the same values as inductor 130 and capacitor 131) in parallel, the inductors 130 and 140 being arranged in the respective plug and socket so as to be magnetically coupled when the plug and socket are interengaged. When such coupling exists, the impedance of the tuned circuit 130, 131 at resonance is reduced, thereby reducing the positive feedback around amplifier 132 to the point where oscillation no longer occurs. Each socket except that associated with the "potato picker" has its inductor 140 and capacitor 141 unconnected to other circuit elements, but the "potato picker" socket has the emergency switch 125a in this case a normally open switch, connected across the inductor/capacitor. When switch 125a is open oscillation is suppressed, but can commence if switch 125a is closed.

The output of amplifier 132 is connected to a detector circuit 142 which produces a d.c. output if the amplitude of the output of amplifier 132 exceeds a predetermined threshold. The detector output is connected to one input of a flip-flop circuit 143 which drives a relay 144 having a normally open contact 144a which is connected in the logic circuit 10 in exactly the same position as the switch 112d of Figure 1. For initial setting of the circuit 143 there is a capacitor 145 connected at one side to the rail 135 and at the other side by a resistor 146 to the rail 136. A diode 147 has its anode connected to the junction of capacitor 145 with resistor 146, and its cathode connected by a resistor 148 to the flip-flop circuit 143. At switch-on, whilst the capacitor 145 is charging a high input is provided to circuit 143 via diode 147 so that the output of circuit 143 goes low energising the relay 144 and closing contact 144a. If at any time the amplifier 132 starts to produce an oscillating output, the output of circuit 143 goes high, de-energising the relay. Oscillation will occur whenever either the plug is not in a socket or the plug is in a socket and the tuned circuit in the latter is shorted out by the associated switch 125a.

The embodiment of the invention shown in Figure 6 has the advantage that a sufficient coupling between the inducotrs in the plug and socket can be obtained even if the plug is not fully inserted.

C L A I M S

1.  A safety system for a tractor vehicle and a trailer
vehicle equipped with a machine, said safety system
comprising a connector having a plurality of magnetically
operable switches mounted on the tractor vehicle, a
mating connector mounted on the trailer vehicle having
magnets for closing appropriate ones of the magnetically
operable switches, a logic circuit connected to the
magnetically operable switches, and safety means driven
by the logic circuit, the arrangement being such that the
closed magnetically operable switches provide links
between circuit elements of the logic circuit appropriate
to the safety requirements of the trailer machine in use
and the safety means/operated when the safety requirements
of the trailer machine are not met.

2.  A safety system as claimed in Claim 1 in which the
tractor connector includes an inductive element arranged
to co-operate with an inductive element provided in the
trailer connector, the logic circuit being capable of
determining coupling between the two inductive elements.

3.  A safety system as claimed in Claim 1 or Claim 2 in
which the safety means comprises a warning means.

4.  A safety system as claimed in Claim 1 or Claim 2 in
which the safety means comprises a vehicle disabling means.

FIG. 1.

FIG.2.

0036324

FIG.3.

FIG. 4.

FIG.5.

117     112

118

FIG.6.

135
133
137  132  138
142
148   145
147
144a
139
142
143
144
112
146
130  131
134
136
117
125a
140   141